# EUROPEAN PATENT SPECIFICATION

(11) **EP 2 309 774 B1**
(45) Date of publication and mention of the grant of the patent: **29.08.2012**
(21) Application number: 09829157.8
(22) Date of filing: 27.11.2009
(51) Int. Cl.: B06B 1/06, G01S 15/89, G10K 11/35, G10K 11/34

(54) **ULTRASONIC TRANSDUCER, ELECTRONIC DEVICE, AND ULTRASONIC ENDOSCOPE**
ULTRASCHALLWANDLER, ELEKTRONISCHE VORRICHTUNG UND ULTRASCHALLENDOSKOP
TRANSDUCTEUR ULTRASONIQUE, DISPOSITIF ÉLECTRONIQUE ET ENDOSCOPE ULTRASONIQUE

(30) Priority: 28.11.2008 JP 2008304744
(43) Date of publication of application: 13.04.2011
(73) Proprietor: Olympus Medical Systems Corp., Tokyo 151-0072 (JP)
(72) Inventor: MIZUNUMA Akiko, Tokyo 151-0072 (JP); SAWADA, Yukihiko, Tokyo 151-0072 (JP); WAKABAYASHI, Katsuhiro, Tokyo 151-0072 (JP); FUJIMURA, Takanao, Tokyo 151-0072 (JP); IMAHASHI, Takuya, Tokyo 151-0072 (JP); SATO, Sunao, Tokyo 151-0072 (JP); IRIE, Kei, Tokyo 151-0072 (JP); KURIHARA, Kozue, Tokyo 151-0072 (JP); ADACHI, Hideo, Tokyo 151-0072 (JP)
(74) Representative: Gunzelmann, Rainer
(86) International application number: PCT/JP2009/070020
(87) International publication number: WO 2010/061912

(56) References cited:
- JP-A- 4 043 957
- JP-A- 2008 022 887
- JP-A- 2008 092 054
- US-A- 5 605 154
- US-A1- 2003 055 308
- US-A1- 2005 124 880
- US-A1- 2008 021 324

## Description

### Technical Field

The present invention relates to an ultrasound transducer made up of elements arranged in a matrix form, each provided with an electromechanical conversion element, an electronic device and an ultrasound endoscope.

### Background Art

Ultrasound transducers are known which form a two-dimensional array by arranging electromechanical conversion elements such as a plurality of piezoelectric transducers capable of transmitting/receiving ultrasound in a matrix form, change a direction in which individual electromechanical conversion elements are driven, and can thereby switch the electronic scanning direction of ultrasound between two directions. Such an electronic scanning ultrasound transducer provided with a two-dimensional array is disclosed, for example, in Japanese Patent Application Laid-Open Publication No. 2005-277864.

Since an electronic scanning ultrasound transducer provided with a two-dimensional array requires that signal wiring for performing signal input/output is connected to each electromechanical conversion element configuring a two-dimensional array, the number of signal wirings is increased and the bundle of cables (composite coaxial cables) are thickened, which leads to a problem of size increase of the apparatus. For example, in the case that a two-dimensional array is configured by electromechanical conversion elements of n rows and m columns, an n-by-m signal wirings are necessary.

As a way to reduce the number of signal wirings in an electronic scanning ultrasound transducer, it is known to dispose a switch apparatus such as a multiplexer for switching the input/output path of signals to each electromechanical conversion element in the vicinity of the two-dimensional array. However, when realizing two-dimensional scanning, the number of wirings between the two-dimensional array and the multiplexer is not largely reduced. In addition, since the voltage necessary for driving the electromechanical conversion elements and transmitting ultrasound is relatively high, it is difficult to reduce the size of the multiplexer itself and size increase of the apparatus is still unavoidable.

The present invention has been made in view of the above-mentioned problem, and has an objective to provide an ultrasound transducer capable of switching the electronic scanning direction of ultrasound between two directions and capable of size reduction of the apparatus by reducing the number of signal wirings to a large extent, and an electronic device and an ultrasound endoscope provided with this ultrasound transducer.

### Disclosure of Invention

### Means for Solving the Problem

An ultrasound transducer according to the present invention is characterized in including elements each provided with an electromechanical conversion element provided with a first electrode and a second electrode arranged facing each other, which converts an electric signal inputted between the first electrode and the second electrode into vibration, first electrode terminals electrically connected to the first electrode and second electrode terminals electrically connected to the second electrode; an array section made up of n elements in a row direction and m (m is equal to or bigger than n) elements in a column direction arranged in a matrix form; an array forming section that switches between a one-dimensional array state column-wise made up of m element groups formed by electrically connecting the first electrode terminals in the element groups arranged on the same column and a one-dimensional array state row-wise made up of n element groups formed by electrically connecting the first electrode terminals in the element groups arranged on the same row in the array section; signal wiring arranged so as to be electrically connected to at least one of the first electrodes in each element group of the m element groups in the one-dimensional array state column-wise and electrically connected to at least one of the first electrodes in each element group of the n element groups in the one-dimensional array state row-wise; and ground wiring arranged so as to be electrically connected to all the second electrodes in both the one-dimensional array state column-wise and the one-dimensional array state row-wise.

An electronic device according to the present invention is characterized in being provided with the above described ultrasound transducer. Furthermore, the ultrasound endoscope according to the present invention is characterized in including the above described electronic device.

### Brief Description of the Drawings

Fig. 1 is a perspective view of an ultrasound transducer according to a first embodiment;
Fig. 2 is a perspective view of the ultrasound transducer when a c-MUT is used for the electromechanical conversion element in the first embodiment;
Fig. 3 is a top view of the ultrasound transducer of the first embodiment;
Fig. 4 is an IV-IV cross-sectional view of Fig. 3;
Fig. 5 is a diagram illustrating a one-dimensional array state column-wise;
Fig. 6 is a VI-VI cross-sectional view of Fig. 5;
Fig. 7 is a diagram illustrating a one-dimensional array state row-wise;
Fig. 8 illustrates a mode of connection between an array section and ground wiring according to a second embodiment;
Fig. 9 illustrates a mode of connection between an array section and signal wiring according to a third embodiment;
Fig. 10 illustrates a mode of connection between an array section and signal wiring according to a fourth embodiment;
Fig. 11 illustrates modes of elements and electrode terminals according to a fifth embodiment;
Fig. 12 illustrates a mode of an array section according to a sixth embodiment;
Fig. 13 is a top view illustrating a mode of an array forming section according to a seventh embodiment;
Fig. 14 is a XIV-XIV cross-sectional view of Fig. 13;
Fig. 15 is a diagram illustrating a modification example of the seventh embodiment;
Fig. 16 is a cross-sectional view illustrating a mode of an array forming section according to an eighth embodiment;
Fig. 17 is a top view illustrating operation of the array forming section according to the eighth embodiment;
Fig. 18 is a top view illustrating operation of the array forming section of the eighth embodiment;
Fig. 19 is a diagram illustrating a modification example of the eighth embodiment;
Fig. 20 is a cross-sectional view illustrating a configuration of an ultrasound transducer according to a ninth embodiment;
Fig. 21 illustrates a configuration of an ultrasound endoscope to which the ultrasound transducer of the present invention is applied; and
Fig. 22 illustrates a configuration of an ultrasound flaw detecting apparatus to which the ultrasound transducer of the present invention is applied.

### Best Mode for Carrying Out the Invention

Preferred embodiments of an ultrasound transducer, an electronic device and an ultrasound endoscope according to the present invention will be described with reference to the accompanying drawings. In some of the drawings used in the following descriptions, scaling is made to differ from one component to another to illustrate the respective components on the order of size recognizable on the drawings, and the present invention is not limited only to the quantity of the components, shapes of the components, ratio in size of the components and relative positional relationship between the components described in the drawings.

### (First embodiment)

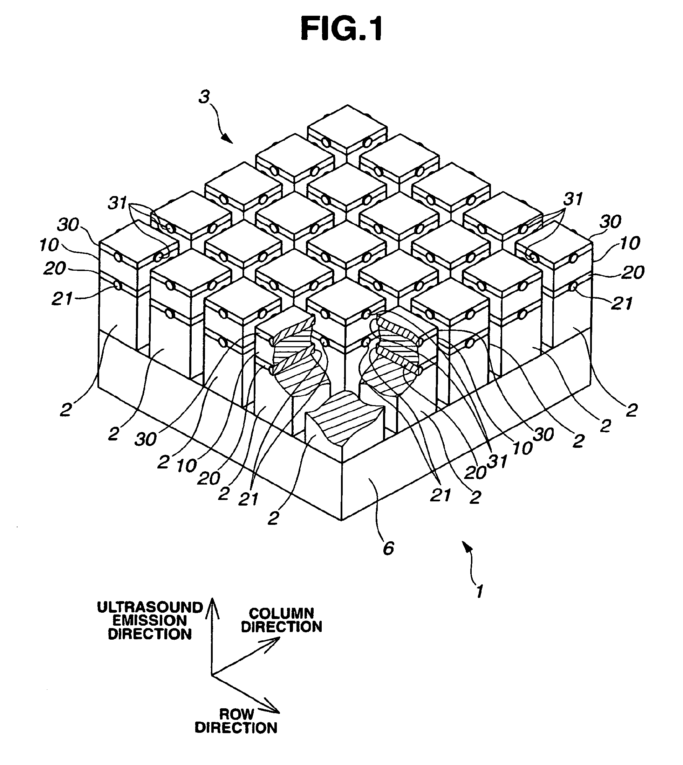

Hereinafter, a first embodiment of the present invention will be described. As shown in Fig. 1, an ultrasound transducer 1 of the present embodiment is configured by including an array section 3 made up of a plurality of elements 2 arranged in a matrix form, each having an electromechanical conversion element 10 and an array forming section 6 for switching between states of the array section 3.

The electromechanical conversion element 10 is an element provided with a first electrode 20 and a second electrode 30 arranged facing each other that performs mutual conversion between a variation of an electric signal inputted between the first electrode 20 and the second electrode 30 and mechanical vibration, and can thereby transmit/receive ultrasound.

In the present embodiment, when an ultrasound emission direction of the ultrasound transducer 1 is assumed to be upward, the first electrode 20 is disposed in a lower part of the electromechanical conversion element 10 and the second electrode 30 is disposed in an upper part of the electromechanical conversion element 10.

Though the configuration of the electromechanical conversion element 10 is not particularly limited, it is possible to use, for example, a configuration in which the electromechanical conversion element 10 is made up of a piezoelectric element such as piezoelectric ceramics or electrostrictive element or a capacitative ultrasound transducer (Capacitive Micromachined Ultrasound Transducer, hereinafter referred to as "c-MUT") that performs conversion between a variation of capacitance produced by a variation in the electrode distance between the first electrode 20 and the second electrode 30, and vibration (variation) of a vibration membrane including the second electrode 30 or the like.

When, for example, the electromechanical conversion element 10 is made of a piezoelectric element such as piezoelectric ceramics, the electromechanical conversion element 10 includes the piezoelectric element interposed between the first electrode 20 and the second electrode 30 as shown in Fig. 1.

When the electromechanical conversion element 10 is made of a piezoelectric element, the element 2 may be provided with a backing member in a lower part of the electromechanical conversion element 10 according to acoustic characteristics of the electromechanical conversion element 10 and may further be provided with an acoustic matching layer and an acoustic lens in an upper part of the electromechanical conversion element 10.

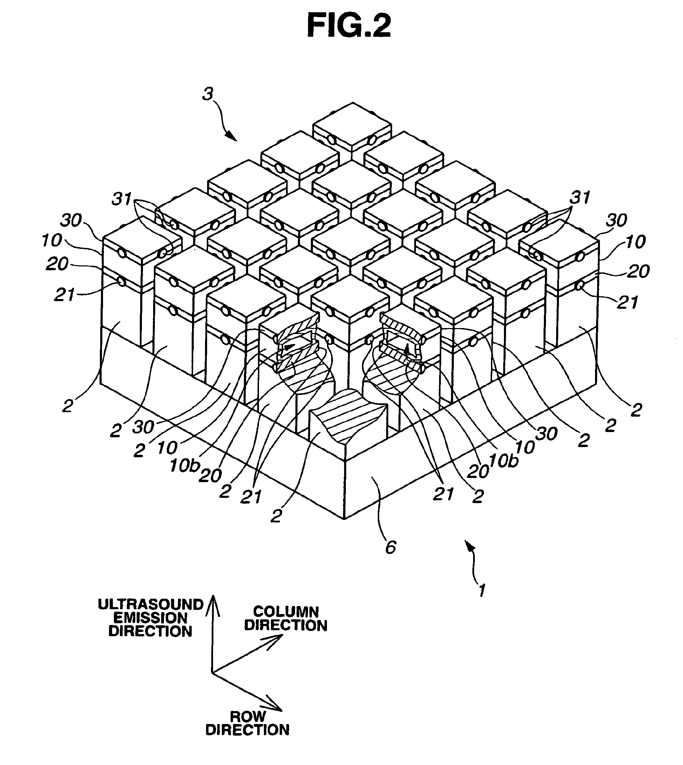

Furthermore, when, for example, the electromechanical conversion element 10 is made up of a c-MUT as shown in Fig. 2, the electromechanical conversion element 10 includes a cavity 10b interposed between the first electrode 20 and the second electrode 30. In this case, a membrane-shaped region located in the upper part of the cavity 10b including the second electrode 30 functions as a vibration membrane.

When the electromechanical conversion element 10 is made up of a c-MUT, a substrate, which is a member of higher rigidity than the vibration membrane may be disposed in the lower part of the electromechanical conversion element 10 to prevent vibration of the first electrode 10. The electromechanical conversion element 10 making up one element 2 may also have a configuration including a plurality of vibration membranes, that is, a configuration in which a plurality of cavities 10b are provided between the first electrode 20 and the second electrode 30.

Hereinafter, the embodiment will be described by taking a case where the electromechanical conversion element 10 shown in Fig. 1 is made up of a piezoelectric element as an example.

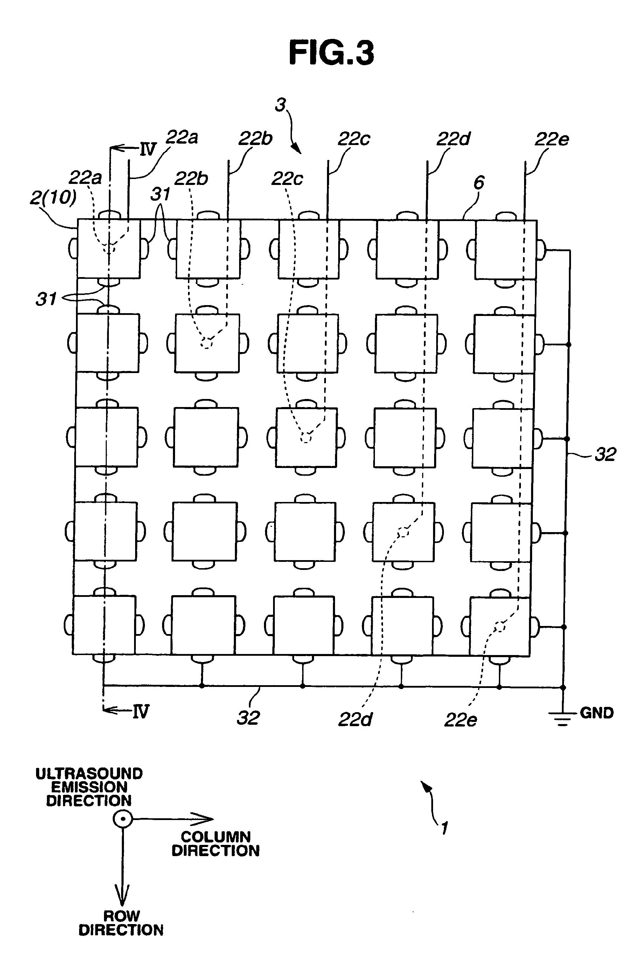

The plurality of elements 2 that make up the array section 3 are arrayed in a matrix form with n elements in the row direction and m elements in the column direction. Here, suppose n and m are natural numbers of 2 or above and satisfy a relationship of n≤m. As an example, suppose the array section 3 of the present embodiment is made up of, for example, five elements 2 in the row direction and fives elements 2 in the column direction as shown in Fig. 1 and Fig. 3. The number of elements 2 making up the array section 3 is not particularly limited as long as it satisfies the above described condition.

Furthermore, although the row direction and the column direction of the array section 3 of the present embodiment are illustrated as having a relationship that the two directions are orthogonal to each other, the mode in which the elements 2 are arrayed in the array section 3 is not limited thereto. For example, the row direction and the column direction of the array section 3 may also have a relationship that the two directions diagonally cross each other.

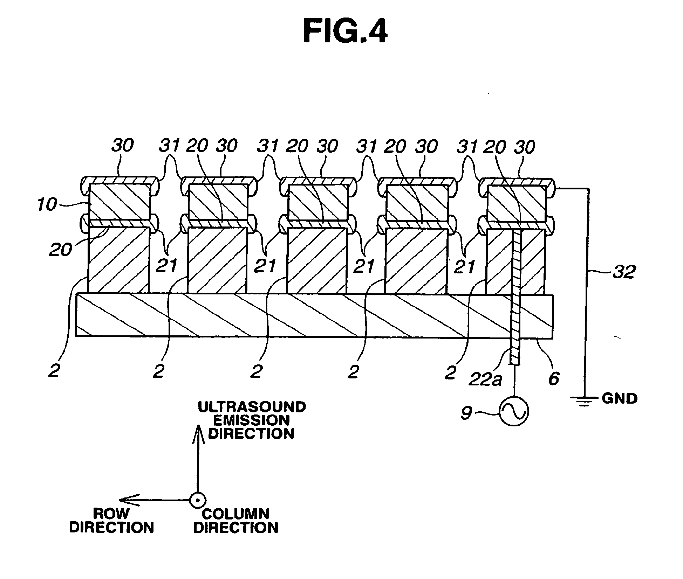

As shown in Fig. 1 and Fig. 4, first electrode terminals 21 electrically connected to the first electrode 20 and second electrode terminals 31 electrically connected to the second electrode 30 are disposed around the perimeter of the element 2. The first electrode terminals 21 and the second electrode terminals 31 of the element 2 are disposed at least on surfaces facing other elements 2 neighboring in the row direction and the column direction.

Furthermore, the ultrasound transducer 1 is provided with signal wiring for transmitting an electric signal from a drive circuit 9 to the first electrode 20 of the electromechanical conversion element 10 and ground wiring for electrically connecting the second electrode 30 to a GND.

To be more specific, signal wiring is disposed so as to be electrically connected to one of the first electrodes 20 of the elements 2 arranged on each column and electrically connected to at least one of the first electrodes 20 of the elements 2 arranged on each row of the array section 3 made up of the elements 2 arrayed on n rows and m columns. That is, a minimum of m signal wires are disposed in the ultrasound transducer 1.

In the ultrasound transducer 1 of the present embodiment, as shown in Fig. 3 and Fig. 4, five signal wires 22a, 22b, 22c, 22d and 22e are disposed so as to be electrically connected to one first electrode 20 of the elements 2 disposed on each column and electrically connected to at least one first electrode 20 of the elements 2 disposed on each row.

In the present embodiment, the signal wires 22a, 22b, 22c, 22d and 22e are electrically connected to the first electrodes 20 of five elements 2 arranged on a diagonal from the top left to the bottom right when viewed from the front of the surface of the sheet in Fig. 3 respectively, but the mode of arrangement of the elements 2 that connect the signal wires is not limited thereto, as will be described later.

On the other hand, ground wiring 32 is disposed so as to be electrically connected to at least one second electrode 30 of the elements 2 arranged on each column and electrically connected to at least one second electrode 30 of the elements 2 arranged on each row in the array section 3 made up of the elements 2 arrayed on n rows and m columns.

The array forming section 6 is disposed below the array section 3. The array forming section 6 has an actuator (not shown) and is configured to be able to change array intervals of the elements 2 in the array section 3 in the row direction or the column direction.

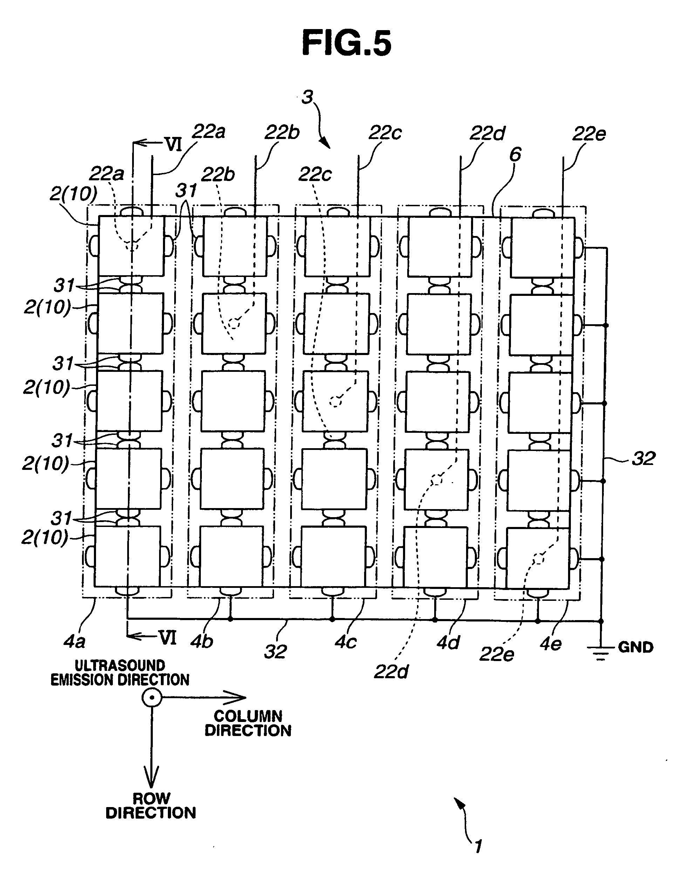

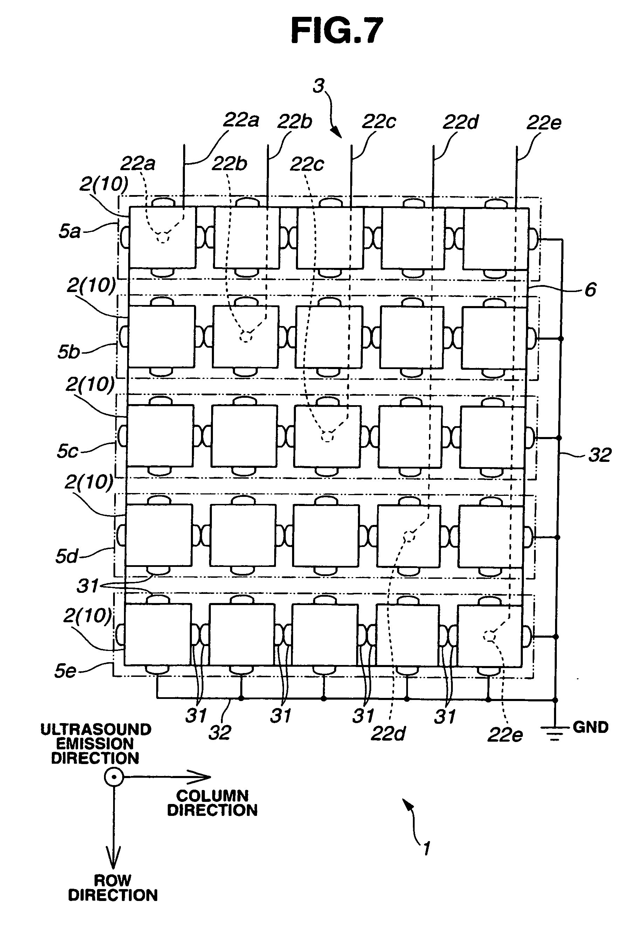

To be more specific, in the array section 3, the array forming section 6 can selectively switch between a state as shown in Fig. 5 in which the elements 2 are clustered so that only array intervals between the elements 2 in the row direction are shortened and a state as shown in Fig. 7 in which the elements 2 are clustered so that only array intervals between the elements 2 in the column direction are shortened.

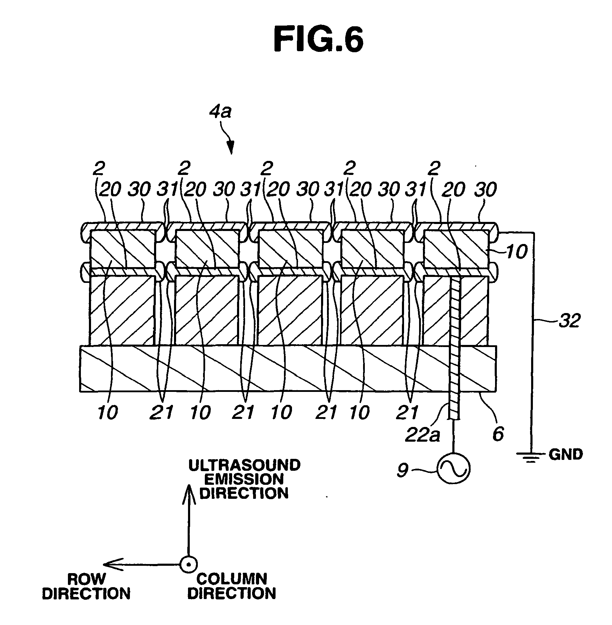

When the array forming section 6 clusters the elements 2 of the array section 3 only in the row direction, as shown in the cross-sectional view of Fig. 6, the first electrode terminals 21 and the second electrode terminals 31 of the elements 2 neighboring each other in the row direction come into contact with each other. That is, in this state, as shown in Fig. 5, the first electrode terminals 21 and the second electrode terminals 31 are electrically connected in a plurality of groups of elements 2 arranged on the same column (hereinafter referred to as "element groups 4a, 4b, 4c, 4d and 4e").

Here, as described above, since the signal wires 22a, 22b, 22c, 22d and 22e are electrically connected to one of the elements 2 arranged on each column of the array section 3, it is possible to input an electric signal to the element groups 4a, 4b, 4c, 4d and 4e via the signal wires 22a, 22b, 22c, 22d and 22e respectively.

Furthermore, since the ground wiring 32 is likewise electrically connected to at least one of the elements 2 arranged on each column of the array section 3, the element groups 4a, 4b, 4c, 4d and 4e are electrically connected to the GND via the ground wiring 32.

For example, when attention is focused on the element group 4a for explanation, as shown in Fig. 6, all the first electrodes 20 of the electromechanical conversion elements 10 in the element group 4a are electrically connected to the drive circuit 9 via the signal wiring 22a. Furthermore, all the second electrodes 30 of the electromechanical conversion elements 10 in the element group 4a are electrically connected to the GND via the ground wiring 32. That is, in this state, the element group 4a becomes a single drive unit.

Therefore, when the array forming section 6 clusters the elements 2 of the array section 3 only in the row direction, a one-dimensional array is formed in which the element groups 4a, 4b, 4c, 4d and 4e, which are m (five in the present embodiment) drive units are arrayed in the column direction. Hereinafter, this state will be referred to as a "one-dimensional array state column-wise."

On the other hand, when the array forming section 6 clusters the elements 2 of the array section 3 only in the column direction, as shown in Fig. 7, the first electrode terminals 21 and the second electrode terminals 31 of the elements 2 neighboring each other in the column direction come into contact with each other. In this state, the first electrode terminals 21 and the second electrode terminals 31 within a plurality of groups of elements 2 (hereinafter referred to as "element groups 5a, 5b, 5c, 5d and 5e") arranged on the same row are electrically connected.

Here, since the signal wires 22a, 22b, 22c, 22d and 22e are electrically connected to at least one of the elements 2 arranged on each row of the array section 3, it is possible to input electric signals to the element groups 5a, 5b, 5c, 5d and 5e via the signal wires 22a, 22b, 22c, 22d and 22e respectively.

Furthermore, since the ground wiring 32 is likewise electrically connected to at least one of the elements 2 arranged on each row of the array section 3, the element groups 5a, 5b, 5c, 5d and 5e are electrically connected to the GND via the ground wiring 32.

Therefore, as in the case of the one-dimensional array state column-wise, when the array forming section 6 clusters the elements 2 of the array section 3 only in the column direction, a one-dimensional array is formed in which the element groups 5a, 5b, 5c, 5d and 5e which are n (five in the present embodiment) drive units are arrayed in the row direction. Hereinafter, this state will be referred to as a "one-dimensional array state row-wise."

According to the ultrasound transducer 1 of the present embodiment configured as shown above, the array forming section 6 changes the state of the array section 3 to a one-dimensional array state column-wise, electric signals are sequentially inputted to the signal wires 22a, 22b, 22c, 22d and 22e to drive the element groups 4a, 4b, 4c, 4d and 4e, and it is thereby possible to perform scanning of ultrasound in the column direction.

Furthermore, the array forming section 6 changes the state of the array section 3 to a one-dimensional array state row-wise, electric signals are sequentially inputted to the signal wires 22a, 22b, 22c, 22d and 22e to drive the element groups 5a, 5b, 5c, 5d and 5e, and it is thereby possible to perform scanning of ultrasound in the row direction.

That is, according to the present embodiment, it is possible to drive the ultrasound transducer 1 having the array section 3 of n rows and m columns (n≤m) capable of changing the scanning direction of ultrasound in two directions using m signal wires.

Thus, according to the present embodiment, it is possible to realize the ultrasound transducer 1 capable of changing the scanning direction in two directions using a drastically small number of signal wires compared to the related art, reduce the diameter of cables and reduce the size of the apparatus. Therefore, when the present ultrasound transducer is mounted at a distal end of an endoscope, it is possible to reduce the diameter and provide an ultrasound endoscope that contributes to alleviation of pain of patients.

Furthermore, the present embodiment allows the number of signal wires of the ultrasound transducer 1 to be reduced compared to the conventional art and thereby improves working performance during assembly.

Although the present embodiment illustrates the mode in which the element 2 has a rectangular shape when viewed from the ultrasound emission direction, the shape of the element 2 is not limited thereto. For example, the element 2 may also have a circular shape viewed from the ultrasound emission direction. In this case, since the distance of space between the neighboring elements 2 becomes nonuniform, acoustic influences (crosstalk) produced between the neighboring elements 2 can be reduced.

Furthermore, the present embodiment illustrates the first electrode terminal 21 and the second electrode terminal 31 as having shapes protruding sideward from the sides of the element 2, but the first electrode terminal 21 and the second electrode terminal 31 may also be configured to be exposed from the sides of the element 2 so that when the distance between the neighboring elements 2 is shortened, the terminals facing each other are electrically connected.

### (Second embodiment)

Hereinafter, a second embodiment of the present invention will be described. The second embodiment illustrates another example of the mode in which the second electrodes of the elements are connected to a GND. The second embodiment is different from the aforementioned first embodiment only in the mode of connection between the elements and the ground wiring. Thus, only this difference will be described below and components similar to those of the first embodiment will be assigned the same reference numerals and descriptions thereof will be omitted as appropriate. As in the case of the aforementioned first embodiment, the electromechanical conversion element 10 of the present embodiment may be made up of a piezoelectric element such as piezoelectric ceramics, electrostrictive element or the like or made up of a c-MUT.

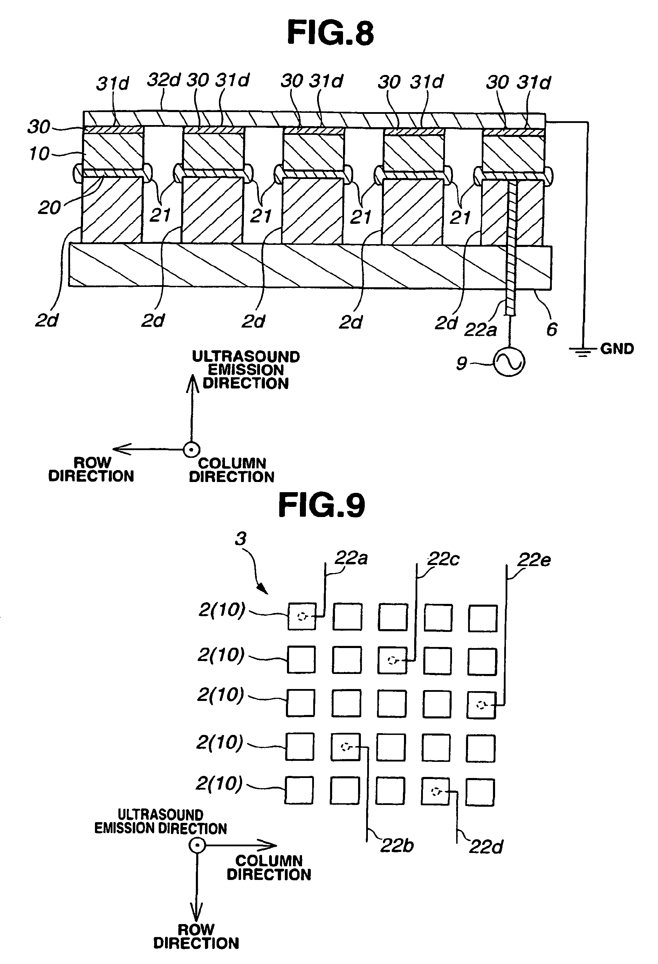

A ground wiring 32d of the present embodiment (see Fig. 8) covers all elements 2d making up the array section 3 and is configured as a covering member made of a conductive member that contacts all second electrode terminals 31 d exposed above the elements 2d.

The shape and material of the ground wiring 32d are not particularly limited, but when, for example, the ground wiring 32d is made of a relatively hard material and when the elements 2d move through operation of the array forming section 6, such a configuration may be considered that the second electrodes terminal 31d slide with respect to the ground wiring 32d.

Furthermore, when the ground wiring 32d is made of an elastic member, the ground wiring 32d is fixed to each second electrode terminal 31d and when the elements 2d move through operation of the array forming section 6, such a configuration may be considered that the ground wiring 32d expands or contracts as the elements 2d move.

Such a configuration allows wiring for electrically connecting the elements 2d to the GND to be easily disposed. Furthermore, the ground wiring 32d also functions as an electromagnetic shield.

The mode of the covering member may also be such that only the underside thereof, that is, the surface that contacts the second electrode terminals 31d is conductive and functions as the ground wiring 32d. The covering member may also be configured so as to have a function of at least one of an acoustic matching layer and an acoustic lens.

Furthermore, the array section 3 may be disposed in a closed space including the covering member and the space may be configured to be filled with an electrically insulating fluid. In this case, the electrically insulating fluid functions as a medium that transmits ultrasound.

### (Third embodiment)

Hereinafter, a third embodiment of the present invention will be described.

The third embodiment illustrates another example of the mode in which signal wiring is connected to the plurality of elements 2 making up the array section 3. The third embodiment is different from the aforementioned first embodiment only in the mode of connection between the array section 3 and the signal wiring. Thus, suppose only this difference will be described hereinafter and components similar to those of the first embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

In the present embodiment (see Fig. 9), signal wires 22a, 22b, 22c, 22d and 22e of the array section 3 are arranged such that distances between the elements 2 to which the respective signal wires are connected are greater.

Increasing the distances between the elements 2 to which the signal wires 22a, 22b, 22c, 22d and 22e are connected in this way can reduce influences of crosstalk among the signal wires 22a, 22b, 22c, 22d and 22e and improve image quality of an ultrasound image obtained by the ultrasound transducer 1. Furthermore, the work of connecting the signal wires 22a, 22b, 22c, 22d and 22e to the elements 2 also becomes easier.

### (Fourth embodiment)

Hereinafter, a fourth embodiment of the present invention will be described. The fourth embodiment illustrates another example of the mode of an array of a plurality of elements making up the array section. The fourth embodiment is different from the aforementioned first embodiment only in the mode of an array of the array section. Thus, suppose only this difference will be described hereinafter and components similar to those of the first embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

In the present embodiment, an array section 3a is made up of elements 2 arrayed in a matrix form, four in the row direction and six in the column direction. That is, n=4 and m=6.

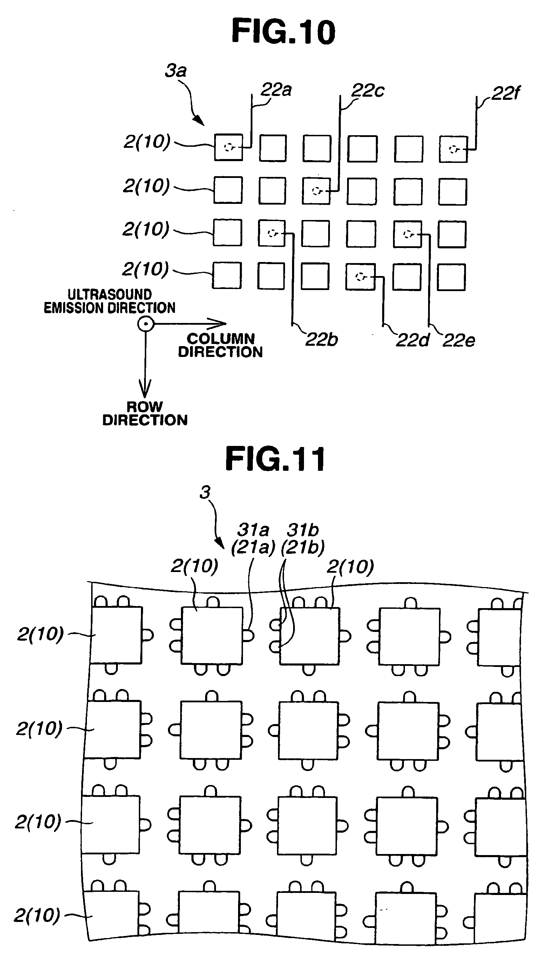

Here, since one signal wire is connected to each column and at least one signal wire is connected to each row as described in the first embodiment, two signal wires 22b and 22e of the six signal wires 22a, 22b, 22c, 22d, 22e and 22f are connected to one row in the present embodiment as shown in Fig. 10.

In such an embodiment as in the case of the first embodiment, if the elements 2 are clustered in the row direction by the array forming section 6, the array section 3a is also set in a one-dimensional array state column-wise made up of six element groups arrayed in the column direction and if the elements 2 are clustered in the column direction, the array section 3a is set in a one-dimensional array state row-wise made up of four element groups arrayed in the row direction. At least one signal wire is connected to every element group whether in the one-dimensional array state column-wise or the one-dimensional array state row-wise.

### (Fifth embodiment)

Hereinafter, a fifth embodiment of the present invention will be described. The fifth embodiment illustrates another example of the mode of electrode terminals electrically connecting neighboring elements. The fifth embodiment is different from the aforementioned first embodiment only in the mode of the first electrode terminals and second electrode terminals. Thus, suppose only this difference will be described hereinafter and components similar to those of the first embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

In the present embodiment, a pair of first electrode terminals 21 a and 21 b disposed on sides of the neighboring elements 2 facing each other have such a shape as to engage with each other when the neighboring elements 2 come closer to each other.

The mode of engagement of the pair of first electrode terminals 21a and 21 b is not particularly limited, but, for example, as shown in Fig. 11, one first electrode terminal 21a may have a convex shape and the other first electrode terminal 21b may have a concave shape.

By causing the first electrode terminals 21a and 21 b facing each other to have shapes of engaging with each other, it is possible to assure electric connections of the first electrodes 20 in element groups in the one-dimensional array state column-wise and the one-dimensional array state row-wise.

Furthermore, a pair of second electrode terminals 31a and 31 b disposed on opposed sides of the neighboring elements 2 likewise also preferably have shapes of engaging with each other when the neighboring elements 2 come closer to each other.

### (Sixth embodiment)

Hereinafter, a sixth embodiment of the present invention will be described. The sixth embodiment illustrates another example of the mode of electrical connection between neighboring elements. The sixth embodiment is different from the aforementioned first embodiment only in the mode of electrical connection between neighboring elements. Thus, suppose only this difference will be described hereinafter and components similar to those of the first embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

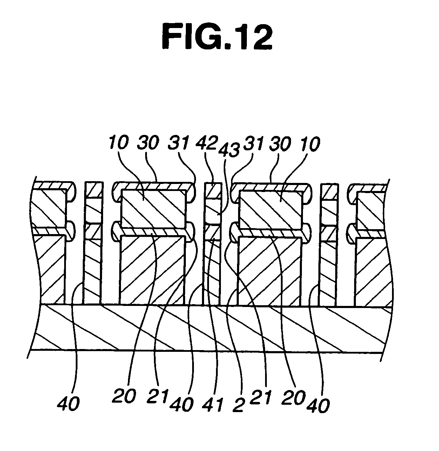

In the present embodiment (see Fig. 12), a spacer 40 is interposed between the neighboring elements 2. The spacer 40 has a first spacer 41 which is a conductive member sandwiched by a pair of first electrode terminals 21 disposed on sides of the neighboring elements 2 when the elements 2 are clustered by operation of the array forming section 6.

Furthermore, the spacer 40 has a second spacer 42 which is a conductive member sandwiched by a pair of second electrode terminals 31 disposed on sides of the neighboring elements 2 when the elements 2 are clustered by operation of the array forming section 6.

An electric insulating member 43 is interposed between the first spacer 41 and the second spacer 42 of the spacer 40.

Provision of the spacer 40 between the neighboring elements 2 makes it possible to reduce the amount of movement of the elements when the array forming section 6 forms a one-dimensional array state column-wise or one-dimensional array state row-wise.

Furthermore, even in the case where spacing between a pair of neighboring elements 2 is increased to an extent not exerting acoustic influences, the moving distance will not increase when both elements are electrically connected.

Therefore, it is possible to shorten the time necessary for the array section 3 to shift from the one-dimensional array state column-wise to the one-dimensional array state row-wise, that is, to change the scanning direction of the ultrasound transducer 1 while improving image quality of an ultrasound image obtained by the ultrasound transducer 1. Furthermore, the size of the array forming section 6 can be reduced.

When all the second electrode terminals 31 are always electrically connected to the GND via the ground electrode wiring as shown in the second embodiment, the spacer 40 is made up of only the first spacer 41.

### (Seventh embodiment)

Hereinafter, a seventh embodiment of the present invention will be described. The seventh embodiment illustrates an example of the array forming section. The seventh embodiment illustrates details of the configuration of the array forming section with respect to the aforementioned first embodiment. Thus, suppose only the difference from the first embodiment will be described hereinafter and components similar to those of the first embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

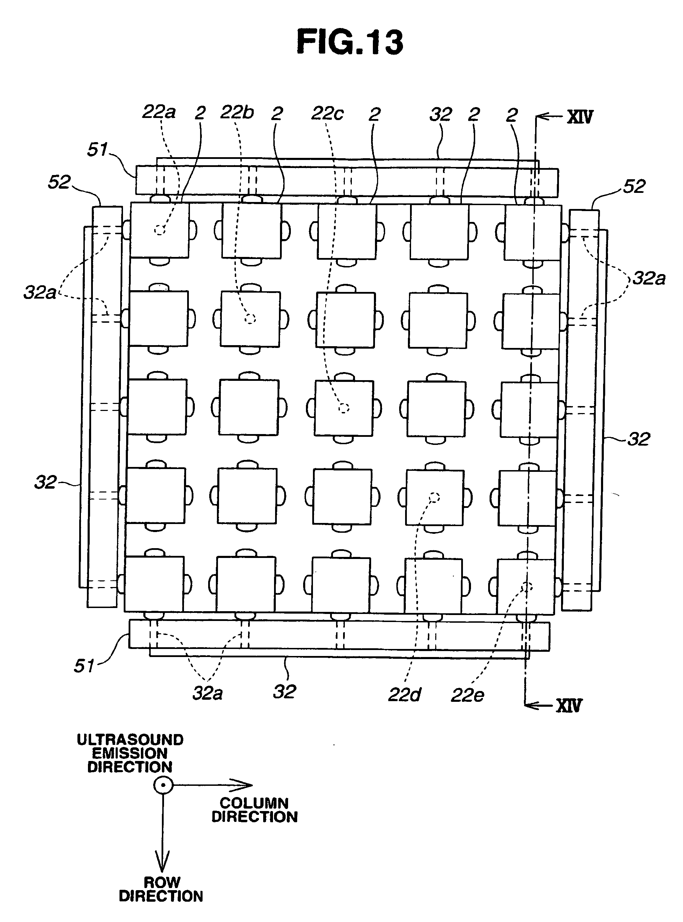

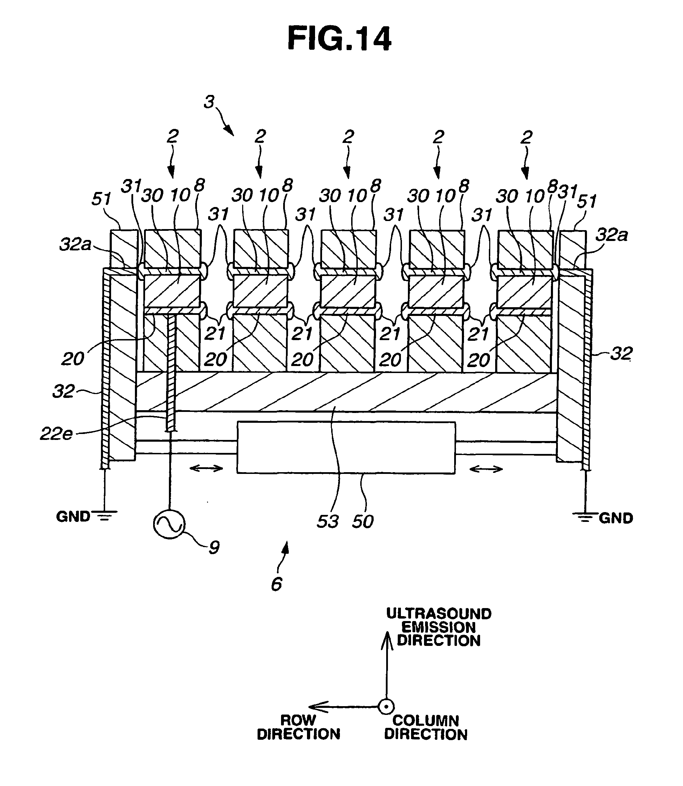

As shown in Fig. 13 and 14 the array forming section 6 is configured by including an actuator 50, a pair of pressing members 51, a pair of pressing members 52 and an elastic member 53. In the present embodiment, the elements 2 making up the array section 3 are arranged on the elastic member 53, which is an elastic and expandable/contractable member.

The pair of pressing members 51 are disposed at both ends of the array section 3 in the row direction. Furthermore, the pair of pressing members 51 are provided with ground wiring 32 and also provided with conductive terminals 32a for electrical connection of the ground wiring 32 and the second electrode terminals 31 of the elements 2.

Furthermore, the pair of pressing members 52 are disposed at both ends of the array section 3 in the column direction. Furthermore, the pair of pressing members 52 are provided with the ground wiring 32 and also provided with conductive terminals 32a for electrical connection of the ground wiring 32 and the second electrode terminals 31 of the elements 2.

The actuator 50 is configured to be able to move the pair of pressing members 51 in the row direction and move the pair of pressing members 52 in the column direction.

In the present embodiment, an acoustic matching layer 8 is disposed above each element 2 of the array section 3.

When setting the array section 3 in a one-dimensional array state column-wise, the array forming section 6 configured as shown above causes the actuator 50 to move the pair of pressing members 51 in the direction of coming closer to each other, compresses the elastic member 53 and clusters the elements 2 in the row direction.

In this case, the other pressing members 52 are retracted outward in the column direction to positions where the pressing members 52 do not interfere with the pressing members 51.

On the other hand, when setting the array section 3 in a one-dimensional array state row-wise, the array forming section 6 causes the actuator 50 to move the pair of pressing members 52 in the direction of coming closer to each other, compresses the elastic member 53 and clusters the elements 2 in the column direction. In this case, the other pressing members 51 are retracted outward in the row direction to positions where the pressing members 51 do not interfere with the pressing members 52.

The pressing members 51 and the pressing members 52 may be moved outward not by a force generated by the actuator 50 but by a restoring force of the elastic member 53.

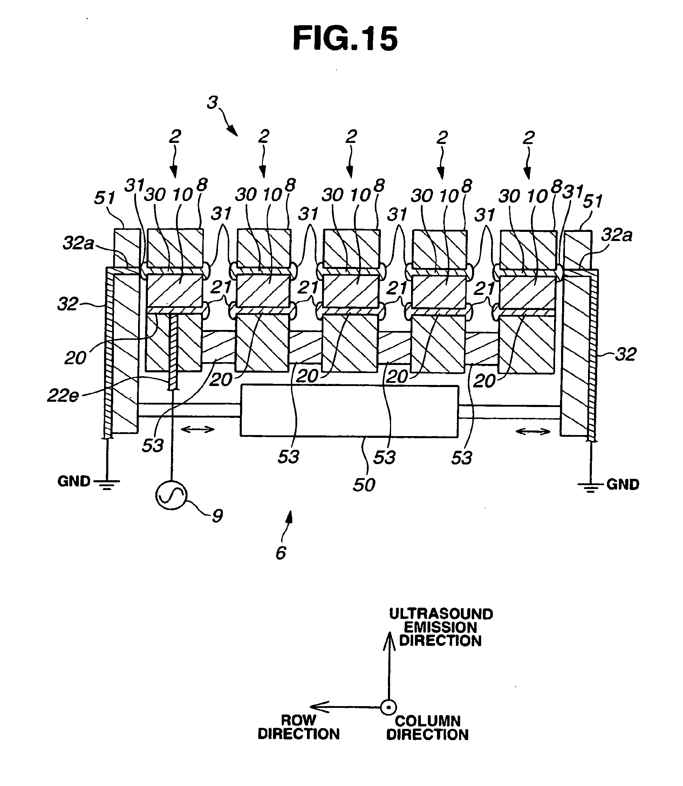

Furthermore, as a modification example shown in Fig. 15, the elastic member 53 may also be interposed between the neighboring elements 2.

Furthermore, the present embodiment adopts the configuration in which the elastic member 53 is deformed by the actuator 50 in the compression direction so that the elements 2 are moved in the direction of clustering together, but the configuration of uniting or separating the elements 2 is not limited thereto. For example, such a configuration of the elements 2 may also be adopted that when the force from the actuator 50 is not applied, the elements 2 remain clustered in the row direction or in the column direction by a force in the direction in which the elastic member 53 contracts and the actuator 50 applies a force of separating the elements 2 from each other in any one of the row direction and the column direction and thereby produces a state in which the elements 2 are clustered only in the other direction.

### (Eighth embodiment)

Hereinafter, an eighth embodiment of the present invention will be described. The eighth embodiment illustrates another example of the array forming section. The eighth embodiment is different from the aforementioned second embodiment in configurations of the elements and the array forming section. Thus, suppose only the difference from the second embodiment will be described hereinafter and components similar to those of the second embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

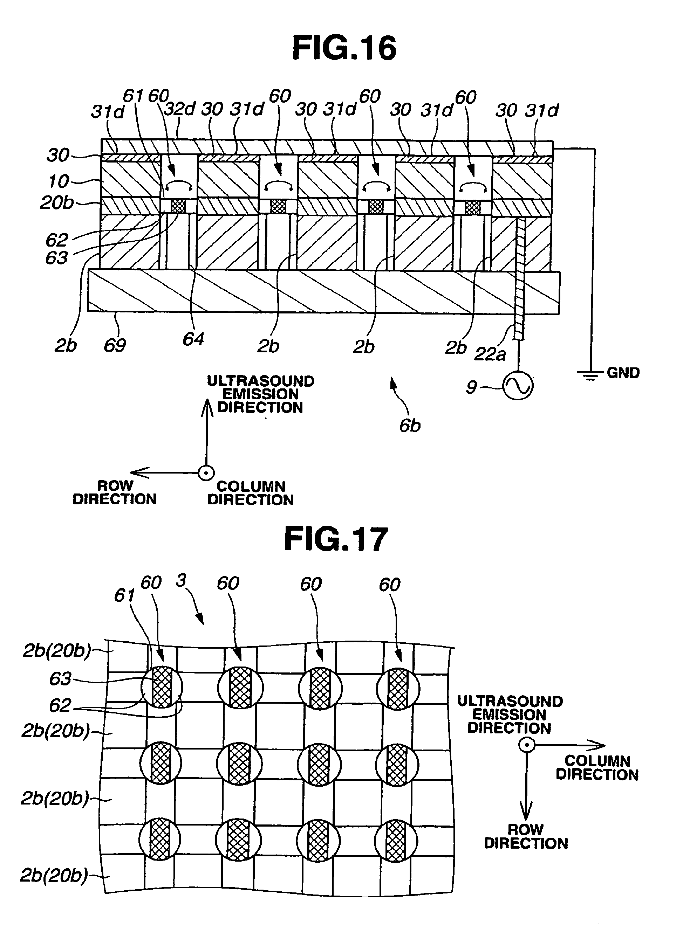

As shown in Fig. 16, elements 2b of the present embodiment are disposed with first electrodes 20b exposed in four surrounding directions and portions of the first electrodes 20b exposed on the sides of the elements 2 function as first electrode terminals.

Furthermore, an array forming section 6b is configured by including switch members 60 provided in a region surrounded by four elements 2b as shown in Fig. 17 and an actuator 69 that causes the switch members 60 to rotate around a rotation shaft 64 substantially parallel to an ultrasound emission direction.

The switch member 60 is configured by including a disk-shaped contact section 61 that contacts the corners of the respective first electrodes 20b of the four surrounding elements 2b. The contact section 61 is pivotably supported by the rotation shaft 64 while in contact with the corners of the four surrounding first electrodes 20b.

The contact section 61 is configured by including an insulating section 63 (region shown by a shaded area in the figure) made of an electrically insulating material that extends so as to divide the center section of a circle when viewed from the top along a predetermined straight line and conductive sections 62 made of a conductive material disposed on both sides of the insulating section 63.

When the contact section 61 is positioned such that the extending direction of the insulating section 63 matches the row direction, the conductive sections 62 electrically connect those neighboring in the row direction of the four surrounding first electrodes 20b (state shown in Fig. 17).

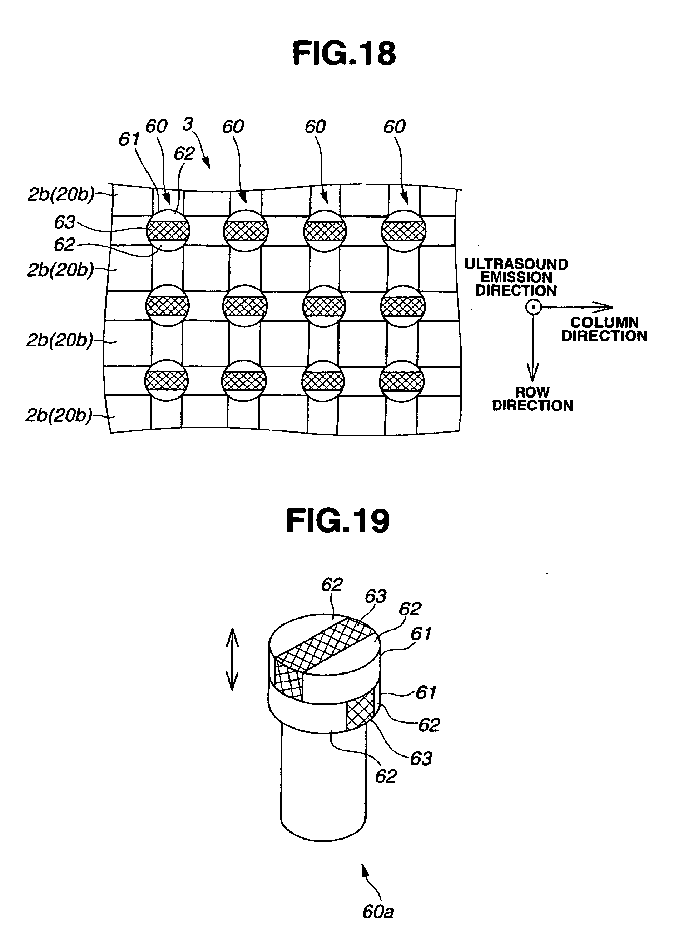

On the other hand, when the contact section 61 is positioned such that the extending direction of the insulating section 63 matches the column direction, the conductive sections 62 electrically connect those neighboring in the column direction of the four surrounding first electrodes 20b (state shown in Fig. 18).

In the present embodiment having the above described configuration, by causing the actuator 69 to rotate the contact sections 61 of the switch members and position the contact sections 61 such that the extending direction of the insulating sections 63 match the row direction, the first electrodes 20b in the element groups arranged on the same column in the array section 3 are electrically connected. That is, the array section 3 is set in a one-dimensional array state column-wise.

On the other hand, by causing the actuator 69 to rotate the contact sections 61 of the switch members and position the contact sections 61 such that the extending direction of the insulating sections 63 match the column direction, the first electrodes 20b in the element groups arranged on the same row in the array section 3 are electrically connected. That is, the array section 3 is set in a one-dimensional array state row-wise.

As a modification example shown in Fig. 19, it is also possible to adopt a configuration in which the disk-shaped contact sections 61 of a switch member 60a are arranged so as to overlap each other such that the extending directions of the insulating sections 63 are substantially orthogonal to each other to allow the actuator 6 to move the pair of overlapping contact sections 61 in the axial direction (ultrasound emission direction). In this case, positioning is performed such that only one of the pair of overlapping contact sections 61 contacts the corners of the four surrounding first electrodes 20b.

In the case of the present embodiment, by moving the switch members 60a up and down, it is possible to electrically connect the first electrodes in an element group in the row direction or in the column direction.

### (Ninth embodiment)

Hereinafter, a ninth embodiment of the present invention will be described. The ninth embodiment illustrates another example of the ultrasound transducer. The ninth embodiment is different from the aforementioned seventh embodiment in the configuration surrounding the array section and the array forming section. Thus, suppose only the difference from the seventh embodiment will be described hereinafter and components similar to those of the seventh embodiment will be assigned the same reference numerals and descriptions thereof will be omitted as appropriate. In the present embodiment as in the case of the aforementioned first embodiment, the electromechanical conversion element 10 may be made up of a piezoelectric element such as piezoelectric ceramics or may also be made up of a c-MUT.

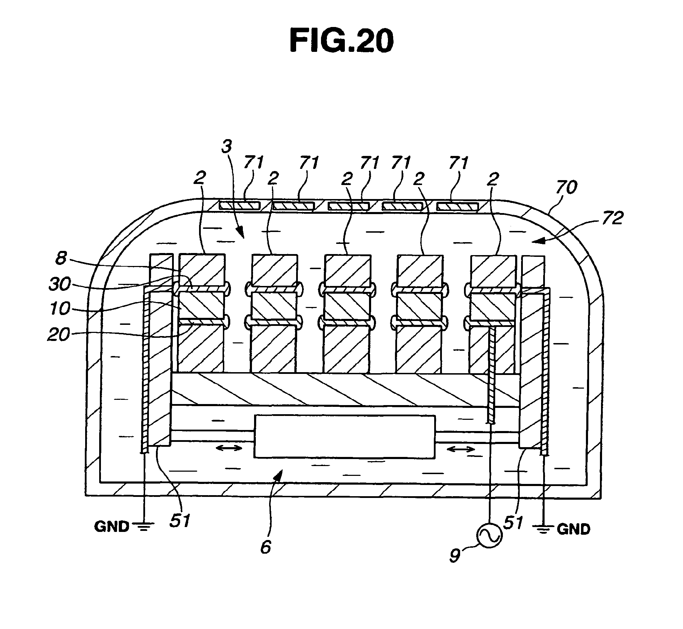

In the present embodiment, as shown in Fig. 20, the array section 3 and the array forming section 6 are disposed in a closed space formed by a covering case 70 made of a watertight material. Electromagnets 71 are disposed in a region of the covering case 70 located above the array section 3. The electromagnets 71 are connected to a power supply apparatus (not shown) and the presence/absence of a power supply is controlled. A magnetic fluid 72 is sealed in the closed space formed by the covering case 70. As the magnetic fluid 72, an electrically insulating fluid is used.

In the present embodiment configured as shown above, with a power supply to the electromagnets 71 being shut off first, the array section 3 is set in a one-dimensional array state column-wise or one-dimensional array state row-wise by the array forming section 6. After starting a power supply to the electromagnets 71, ultrasound scanning is performed by the array section 3.

In this case, the magnetic fluid 72 is attracted to the electromagnets 71 in the closed space by a magnetic force generated by the electromagnets 71, that is, to the ultrasound emission side of the array section 3. In this way, it is possible to change intensity of a magnetic field applied to a space between the array section 3 and the covering case 70 according to the position and since the space is filled with the magnetic fluid 72 having a relatively high acoustic impedance, excellent acoustic matching can be realized. By concentrating a magnetic fluid of high or low sound velocity at the center of an element group, it is also possible to provide a lens effect.

Furthermore, the magnetic fluid 72 is attracted to the ultrasound emission side of the array section 3, bubbles existing in a region where ultrasound is transmitted/received are pushed away and an excellent ultrasound image can be obtained.

### (Tenth embodiment)

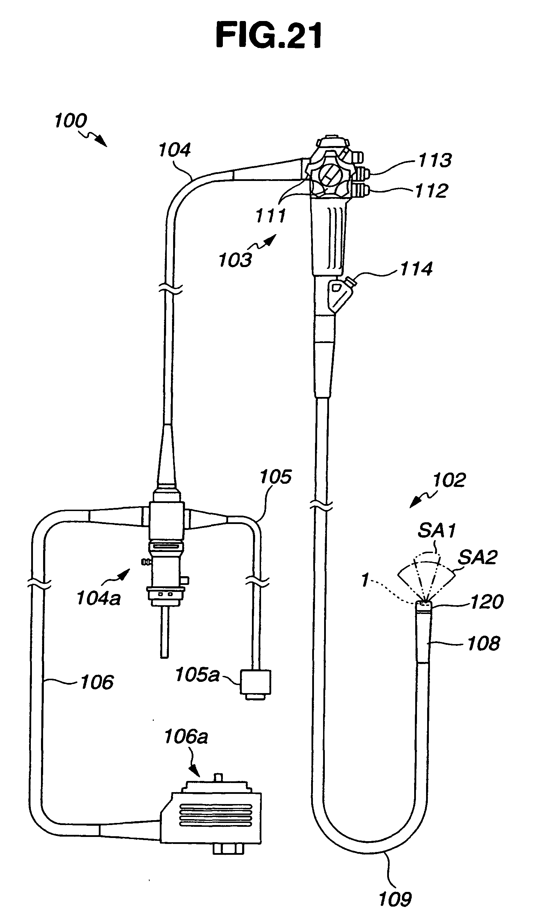

Next, as a tenth embodiment, an example of an electronic device to which the ultrasound transducer of the present invention is applicable will be described. As shown in Fig. 21, an ultrasound endoscope 100 of the present embodiment is mainly configured by including an elongated insertion portion 102 introduced into the body of a subject, an operation portion 103 positioned at a proximal end of the insertion portion 102 and a universal cord 104 that extends out from a side of the operation portion 103.

An endoscope connector 104a connected to a light source apparatus (not shown) is provided at a proximal end portion of the universal cord 104. An electric cable 105 detachably connected to a camera control unit (not shown) via an electric connector 105a and an ultrasound cable 106 detachably connected to an ultrasound observation apparatus (not shown) via an ultrasound connector 106a extend out from the endoscope connector 104a.

The insertion portion 102 is provided with a distal end portion 120 disposed at a distal end, a bending portion 108 disposed at a proximal end of the distal end portion 120, which is freely bendable and a flexible tube portion 109, which is flexible, disposed at a proximal end of the bending portion 108 and connected to a distal end side of the operation portion 103, the portions coupled in sequence. Furthermore, an ultrasound transducer 1 is provided at a distal end of the distal end portion 120.

The operation portion 103 is provided with an angle knob 111 that controls the bending of the bending portion 108 in a desired direction, an air/water feeding button 112 for performing air/water feeding operation, a suction button 113 for performing suctioning operation and a treatment instrument insertion opening 114 that serves as an opening for introducing a treatment instrument into a tube cavity, body cavity or the like.

Since the ultrasound transducer 1 provided at the end of the distal end portion 120 can switch the direction of electronic scanning of ultrasound between two directions, the ultrasound endoscope 100 of the present embodiment can acquire an ultrasound image within a scanning range SA1 and a scanning range SA2.

Furthermore, the distal end portion 120 is provided with an illumination lens making up an illumination optical section that irradiates an observation region with illumination light, an observation optical section that captures an optical image of the observation region, an opening for suction and forceps, which is an opening for suctioning an excised portion or an opening from which a treatment instrument juts out and an air/water feeding opening for feeding air/water or the like.

The ultrasound transducer 1 of the present invention is not limited to the aforementioned ultrasound endoscope, but is applicable to an ultrasound diagnostic apparatus, which is a conventionally well-known electronic apparatus. For example, the ultrasound transducer 1 of the present invention may be applied to an external ultrasound diagnostic apparatus for observing the interior of the body of a subject from outside the body of the subject.

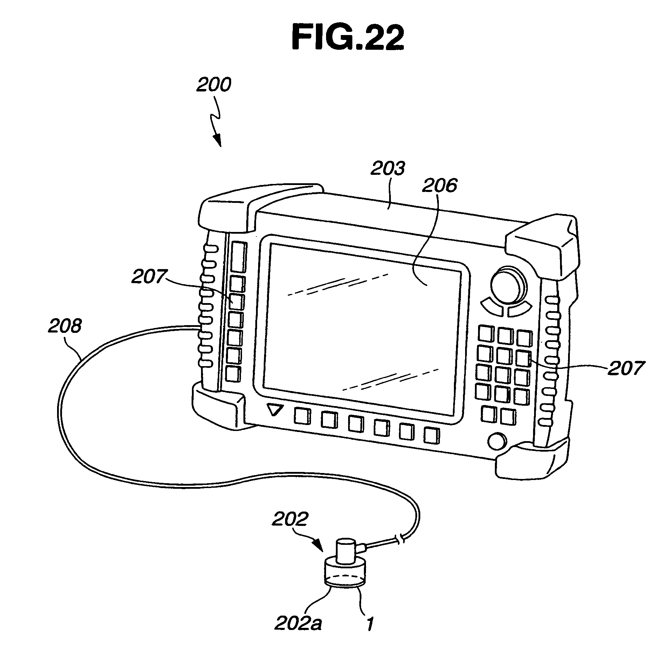

Fig. 22 shows the ultrasound transducer of the present invention applied to an ultrasound flaw detecting apparatus as an example of non-destructive inspection apparatus. Fig. 22 is a diagram illustrating a schematic configuration of the ultrasound flaw detecting apparatus.

The ultrasound flaw detecting apparatus 200 is provided with a probe 202 that transmits/receives ultrasound and a box-type apparatus body 203 for controlling the probe 202.

A display apparatus 206 is provided in the center of the front of the apparatus body 203 for displaying an image for flaw detection and a switch 207 that plays various roles is provided in the vicinity of the display apparatus 206.

Furthermore, the probe 202 is connected to the apparatus body 203 via a composite coaxial cable 208. One or a plurality of ultrasound transducers 1 are disposed on a contact surface 202a inside the probe 202 to cause the probe 202 to contact an object to be examined.

The ultrasound flaw detecting apparatus 200 can emit ultrasound with the contact surface 202a of the probe 202 contacting the object to be examined and detect flaws inside the object to be examined without destroying the object to be examined according to a variation in reflection of ultrasound.

The ultrasound transducer 1 of the present invention is not limited to the aforementioned ultrasound flaw detecting apparatus, but is also applicable to a non-destructive inspection apparatus which is a conventionally well-known electronic device. For example, the ultrasound transducer 1 of the present invention may be applied to a thickness measuring apparatus that measures a thickness of an object to be examined by transmitting/receiving ultrasound.

The present invention is not limited to the aforementioned embodiments, but can be modified as appropriate within the range not departing from the scope or thought of the invention that can be read from the claims of the invention and the entire specification, and such a modified ultrasound transducer and electric apparatus will also be included in the technical scope of the present invention.

## Claims

1. An ultrasound transducer (1) comprising:
elements (2) each comprising an electromechanical conversion element (10) provided with a first electrode (20) and a second electrode (30) arranged facing each other, which is configured to convert an electric signal inputted between the first electrode (20) and the second electrode (30) into vibration,
first electrode terminals (21) electrically connected to the first electrode (20) and second electrode terminals (31) electrically connected to the second electrode (30);
an array section (3) made up of n elements (2) in a row direction and m elements (2) in a column direction arranged in a matrix form, wherein m is equal to or bigger than n;
an array forming section (6) that forms a one-dimensional array state column-wise made up of m element groups formed by electrically connecting the first electrode terminals (21) neighboring in the row direction out of the first electrode terminals (21) in the element groups arranged on the same column and a one-dimensional array state row-wise made up of n element groups formed by electrically connecting the first electrode terminals (21) neighboring in the column direction out of the first electrode terminals (21) in the element groups arranged on the same row in the array section (3);
signal wiring (22a, 22b, 22c, 22d, 22e) arranged so as to be electrically connected to at least one of the first electrodes (20) in each element group of the m element groups in the one-dimensional array state column-wise and
electrically connected to at least one of the first electrodes (20) in each element group of the n element groups in the one-dimensional array state row-wise; and
ground wiring (32) arranged so as to be electrically connected to all the second electrodes (30) in both the one-dimensional array state column-wise and the one-dimensional array state row-wise,
wherein the elements (2) are flexibly connected to each other,
the array forming section (6) includes a member (53) that is expandable/contractable in the row direction and the column direction, and
the expandable/contractable member (53) is configured to contract in the row direction or the column direction, cluster the elements in the row direction or the column direction and thereby form an electric connection state, which makes the one-dimensional array state column-wise or the one-dimensional array state row-wise.

2. The ultrasound transducer (1) according to claim 1, wherein the signal wiring (22a, 22b, 22c, 22d, 22e) is electrically connected to one of the first electrodes (20) of the elements (2) arranged on each column in the array section (3) and electrically connected to at least one of the first electrodes (20) of the elements (2) arranged on each row, and
the ground wiring (32) is electrically connected to at least one of the second electrodes (30) of the elements (2) arranged on each column and electrically connected to at least one of the second electrodes (30) of the elements arranged on each row in the array section (3).

3. The ultrasound transducer (1) according to claim 1, wherein the signal wiring (22a, 22b, 22c, 22d, 22e) is electrically connected to one of the first electrodes (20) of the elements (2) arranged on each column and electrically connected to at least one of the first electrodes (20) of the elements (2) arranged on each row in the array section (3), and
the ground wiring (32) is electrically connected to the second electrode terminals (31) of all the elements (2) making up the array section (3).

4. The ultrasound transducer (1) according to claim 1, wherein the first electrode terminals (21) are disposed on surfaces facing each other in the row direction and the column direction of the elements (2) arrayed in a matrix form,
the first electrode terminals (21) facing each other in the row direction or the column direction have shapes engaging with each other in the one-dimensional array state column-wise or the one-dimensional array state row-wise,
the second electrode terminals (31) are disposed on surfaces facing each other in the row direction and the column direction of the elements (2) arrayed in a matrix form, and
the second electrode terminals (31) facing each other in the row direction or the column direction have shapes engaging with each other in the one-dimensional array state column-wise or the one-dimensional array state row-wise.

5. The ultrasound transducer (1) according to claim 1, wherein the first electrode terminals (21) are disposed on surfaces facing each other in the row direction and the column direction of the elements (2) arrayed in a matrix form, and the first electrode terminals (21) facing each other in the row direction or the column direction have shapes engaging with each other in the one-dimensional array state column-wise or the one-dimensional array state row-wise.

6. The ultrasound transducer (1) according to claim 1, wherein the first electrode terminals (21) are disposed on surfaces facing each other in the row direction and the column direction of the elements (2) arrayed in a matrix form,
the second electrode terminals (31) are disposed on surfaces facing each other in the row direction and the column direction of the elements (2) arrayed in a matrix form,
the ultrasound transducer (1) further comprising:
first spacers (41) which have conductive members disposed between the elements (2), interposed between the first electrode terminals (21) facing each other in the row direction in the one-dimensional array state column-wise and interposed between the first electrode terminals (21) facing each other in the column direction in the one-dimensional array state row-wise; and
second spacers (42) which have conductive members disposed between the elements (2), interposed between the second electrode terminals (31) facing each other in the row direction in the one-dimensional array state column-wise and interposed between the second electrode terminals (31) facing each other in the column direction in the one-dimensional array state row-wise.

7. The ultrasound transducer (1) according to claim 1, wherein the first electrode terminals (21) are disposed on surfaces facing each other in the row direction and the column direction of the elements (2) arrayed in a matrix form,
the ultrasound transducer (1) further comprising first spacers (41) which have conductive members disposed between the elements (2), interposed between the first electrode terminals (21) facing each other in the row direction in the one-dimensional array state column-wise and interposed between the first electrode terminals (21) facing each other in column direction in the one-dimensional array state row-wise.

8. The ultrasound transducer (1) according to claim 1, wherein an elastic member (53) is disposed between the elements (2).

9. The ultrasound transducer (1) according to claim 1, wherein a covering section (70) that covers the array section (3) is disposed on an ultrasound emission side of the array section (3).

10. The ultrasound transducer (1) according to claim 9, wherein the covering section (70) has a function of at least one of an acoustic matching layer and an acoustic lens.

11. The ultrasound transducer (1) according to claim 10, wherein the array section (3) is disposed in a closed space including the covering section (70), and the closed space is filled with an electrically insulating fluid.

12. The ultrasound transducer (1) according to claim 11, wherein the electrically insulating fluid includes a magnetic fluid (72), the ultrasound transducer (1) further comprising an electromagnet (71) for moving the magnetic fluid (72) to the ultrasound emission side in the closed space.

13. The ultrasound transducer (1) according to claim 3, wherein a conductive covering section (70) that covers the array section (3) is disposed on the ultrasound emission side of the array section (3) and at least part of the covering section (70) also serves as the ground wiring (32).

14. The ultrasound transducer (1) according to claim 13, wherein the covering section (70) has a function of at least one of an acoustic matching layer and an acoustic lens.

15. The ultrasound transducer (1) according to claim 1, wherein the array section (3) is disposed in a closed space formed by a covering case, and the closed space is filled with an electrically insulating fluid.

16. The ultrasound transducer (1) according to claim 15, wherein the electrically insulating fluid includes a magnetic fluid (72), the ultrasound transducer (1) further comprising an electromagnet (71) for moving the magnetic fluid (72) to the ultrasound emission side in the closed space.

17. An electronic device comprising the ultrasound transducer (1) according to claim 1.

18. An ultrasound endoscope comprising the electronic device according to claim 17.

## Patentansprüche

1. Ultraschallwandler (1), der aufweist:
Elemente (2) mit jeweils einem elektromechanischen Umwandlungselement (10), das eine erste Elektrode (20) und eine zweite Elektrode (30), die einander gegenüberliegend angeordnet sind, aufweist, das dazu ausgebildet ist, ein zwischen der ersten Elektrode (20) und der zweiten Elektrode (30) eingegebenes elektrisches Signal in eine Schwingung umzuwandeln, mit elektrisch mit der ersten Elektrode (20) verbundenen ersten Elektrodenanschlüssen (21) und mit elektrisch mit der zweiten Elektrode (30) verbundenen zweiten Elektrodenanschlüssen (31);
einen Anordnungsbereich (3), der aus n Elementen (2) in einer Zeilenrichtung und m Elementen (2) in einer Spaltenrichtung besteht, die in einer Matrixform angeordnet sind, wobei m gleich oder größer als n ist;
einen Anordnungsbildungsbereich (6), der einen spaltenweise eindimensionalen Anordnungszustand, der aus m Elementgruppen besteht, die gebildet werden,
indem von den ersten Elektrodenanschlüssen (21) in den in derselben Spalte angeordneten Elementgruppen die in der Zeilenrichtung angrenzenden ersten Elektrodenanschlüsse (21) elektrisch verbunden werden, und einen zeilenweise eindimensionalen Anordnungszustand bildet, der aus n Elementgruppen besteht, die gebildet werden, indem von den ersten Elektrodenanschlüssen (21) in den in derselben Zeile in dem Anordnungsbereich (3) angeordneten Elementgruppen die in der Spaltenrichtung angrenzenden ersten Elektrodenanschlüsse (21) elektrisch verbunden werden;
eine Signalverdrahtung (22a, 22b, 22c, 22d, 22e), die so angeordnet ist, dass sie mit mindestens einer der ersten Elektroden (20) in jeder Elementgruppe der m Elementgruppen in dem spaltenweise eindimensionalen Anordnungszustand elektrisch verbunden ist und mit mindestens einer der ersten Elektroden (20) in jeder Elementgruppe der n Elementgruppen in dem zeilenweise eindimensionalen Anordnungszustand elektrisch verbunden ist; und
eine Masseverdrahtung (32), die so angeordnet ist, dass sie mit allen zweiten Elektroden (30) sowohl in dem spaltenweise eindimensionalen Anordnungszustand als auch in dem zeilenweise eindimensionalen Anordnungszustand elektrisch verbunden ist,
wobei die Elemente (2) flexibel miteinander verbunden sind, der Anordnungsbildungsbereich (6) ein Element (53) aufweist, das in der Zeilenrichtung und der Spaltenrichtung ausdehnbar/zusammenziehbar ist, und das ausdehnbare/zusammenziehbare Element (53) dazu ausgebildet ist, sich in der Zeilenrichtung oder der Spaltenrichtung zusammenzuziehen, die Elemente in der Zeilenrichtung oder der Spaltenrichtung zu gruppieren und dadurch einen elektrischen Verbindungszustand zu bilden, der den spaltenweise eindimensionalen Anordnungszustand oder den zeilenweise eindimensionalen Anordnungszustand gestaltet.

2. Ultraschallwandler (1) nach Anspruch 1, wobei die Signalverdrahtung (22a, 22b, 22c, 22d, 22e) mit einer der ersten Elektroden (20) der in jeder Spalte in dem Anordnungsbereich (3) angeordneten Elemente (2) elektrisch verbunden ist und mit mindestens einer der ersten Elektroden (20) der in jeder Zeile angeordneten Elemente (2) elektrisch verbunden ist, und
die Masseverdrahtung (32) mit mindestens einer der zweiten Elektroden (30) der in jeder Spalte angeordneten Elemente (2) elektrisch verbunden ist und mit mindestens einer der zweiten Elektroden (30) der in jeder Zeile in dem Anordnungsbereich (3) angeordneten Elemente elektrisch verbunden ist.

3. Ultraschallwandler (1) nach Anspruch 1, wobei die Signalverdrahtung (22a, 22b, 22c, 22d, 22e) mit einer der ersten Elektroden (20) der in jeder Spalte angeordneten Elemente (2) elektrisch verbunden ist und mit mindestens einer der ersten Elektroden (20) der in jeder Zeile in dem Anordnungsbereich (3) angeordneten Elemente (2) elektrisch verbunden ist, und
die Masseverdrahtung (32) mit den zweiten Elektrodenanschlüssen (31) aller Elemente (2), die den Anordnungsbereich (3) bilden, elektrisch verbunden ist.

4. Ultraschallwandler (1) nach Anspruch 1, wobei die ersten Elektrodenanschlüsse (21) auf Flächen angeordnet sind, die einander in der Zeilenrichtung und der Spaltenrichtung der in einer Matrixform angeordneten Elemente (2) gegenüberliegen,
die einander in der Zeilenrichtung oder der Spaltenrichtung gegenüberliegenden ersten Elektrodenanschlüsse (21) Formen aufweisen, die in dem spaltenweise eindimensionalen Anordnungszustand oder dem zeilenweise eindimensionalen Anordnungszustand miteinander in Eingriff stehen,
die zweiten Elektrodenanschlüsse (31) auf Flächen angeordnet sind, die einander in der Zeilenrichtung und der Spaltenrichtung der in einer Matrixform angeordneten Elemente (2) gegenüberliegen, und
die einander in der Zeilenrichtung oder der Spaltenrichtung gegenüberliegenden zweiten Elektrodenanschlüsse (31) Formen aufweisen, die in dem spaltenweise eindimensionalen Anordnungszustand oder dem zeilenweise eindimensionalen Anordnungszustand miteinander in Eingriff stehen.

5. Ultraschallwandler (1) nach Anspruch 1, wobei die ersten Elektrodenanschlüsse (21) auf Flächen angeordnet sind, die einander in der Zeilenrichtung und der Spaltenrichtung der in einer Matrixform angeordneten Elemente (2) gegenüberliegen, und die einander in der Zeilenrichtung oder der Spaltenrichtung gegenüberliegenden ersten Elektrodenanschlüsse (21) Formen aufweisen, die in dem spaltenweise eindimensionalen Anordnungszustand oder dem zeilenweise eindimensionalen Anordnungszustand miteinander in Eingriff stehen.

6. Ultraschallwandler (1) nach Anspruch 1, wobei die ersten Elektrodenanschlüsse (21) auf Flächen angeordnet sind, die einander in der Zeilenrichtung und der Spaltenrichtung der in einer Matrixform angeordneten Elemente (2) gegenüberliegen,
die zweiten Elektrodenanschlüsse (31) auf Flächen angeordnet sind, die einander in der Zeilenrichtung und der Spaltenrichtung der in einer Matrixform angeordneten Elemente (2) gegenüberliegen,
wobei der Ultraschallwandler (1) ferner umfasst:
erste Abstandshalter (41), die zwischen den Elementen (2) angeordnete leitfähige Elemente aufweisen, die zwischen den einander in der Zeilenrichtung in dem spaltenweise eindimensionalen Anordnungszustand gegenüberliegenden ersten Elektrodenanschlüssen (21) eingefügt sind und die zwischen den einander in der Spaltenrichtung in dem zeilenweise eindimensionalen Anordnungszustand gegenüberliegenden ersten Elektrodenanschlüssen (21) eingefügt sind; und
zweite Abstandshalter (42), die zwischen den Elementen (2) angeordnete leitfähige Elemente aufweisen, die zwischen den einander in der Zeilenrichtung in dem spaltenweise eindimensionalen Anordnungszustand gegenüberliegenden zweiten Elektrodenanschlüssen (31) eingefügt sind und die zwischen den einander in der Spaltenrichtung in dem zeilenweise eindimensionalen Anordnungszustand gegenüberliegenden zweiten Elektrodenanschlüssen (31) eingefügt sind.

7. Ultraschallwandler (1) nach Anspruch 1, wobei die ersten Elektrodenanschlüsse (21) auf Flächen angeordnet sind, die einander in der Zeilenrichtung und der Spaltenrichtung der in einer Matrixform angeordneten Elemente (2) gegenüberliegen,
wobei der Ultraschallwandler (1) ferner erste Abstandshalter (41), die zwischen den Elementen (2) angeordnete leitfähige Elemente aufweisen, umfasst, die zwischen den einander in der Zeilenrichtung in dem spaltenweise eindimensionalen Anordnungszustand gegenüberliegenden ersten Elektrodenanschlüssen (21) eingefügt sind und die zwischen den einander in der Spaltenrichtung in dem zeilenweise eindimensionalen Anordnungszustand gegenüberliegenden ersten Elektrodenanschlüssen (21) eingefügt sind.

8. Ultraschallwandler (1) nach Anspruch 1, wobei ein elastisches Element (53) zwischen den Elementen (2) eingefügt ist.

9. Ultraschallwandler (1) nach Anspruch 1, wobei ein Abdeckbereich (70), der den Anordnungsbereich (3) abdeckt, auf einer Ultraschall-Emissionsseite des Anordnungsbereichs (3) angeordnet ist.

10. Ultraschallwandler (1) nach Anspruch 9, wobei der Abdeckbereich (70) eine Funktion einer akustischen Anpassungsschicht und/oder einer akustischen Linse aufweist.

11. Ultraschallwandler (1) nach Anspruch 10, wobei der Anordnungsbereich (3) in einem geschlossenen Raum angeordnet ist, der den Abdeckbereich (70) enthält, und
der geschlossene Raum mit einem elektrisch isolierenden Fluid gefüllt ist.

12. Ultraschallwandler (1) nach Anspruch 11, wobei das elektrisch isolierende Fluid ein Magnetfluid (72) aufweist, wobei der Ultraschallwandler (1) ferner einen Elektromagneten (71) umfasst, um das Magnetfluid (72) zu der Ultraschall-Emissionsseite in dem geschlossenen Raum zu bewegen.

13. Ultraschallwandler (1) nach Anspruch 3, wobei ein leitfähiger Abdeckbereich (70), der den Anordnungsbereich (3) abdeckt, auf der Ultraschall-Emissionsseite des Anordnungsbereichs (3) angeordnet ist und mindestens ein Teil des Abdeckbereichs (70) auch als Masseverdrahtung (32) dient.

14. Ultraschallwandler (1) nach Anspruch 13, wobei der Abdeckbereich (70) eine Funktion einer akustischen Anpassungsschicht und/oder einer akustischen Linse aufweist.

15. Ultraschallwandler (1) nach Anspruch 1, wobei der Anordnungsbereich (3) in einem geschlossenen Raum angeordnet ist, der durch ein Abdeckgehäuse gebildet wird, und
der geschlossene Raum mit einem elektrisch isolierenden Fluid gefüllt ist.

16. Ultraschallwandler (1) nach Anspruch 15, wobei das elektrisch isolierende Fluid ein Magnetfluid (72) aufweist, wobei der Ultraschallwandler (1) ferner einen Elektromagneten (71) umfasst, um das Magnetfluid (72) zu der Ultraschall-Emissionsseite in dem geschlossenen Raum zu bewegen.

17. Elektronische Vorrichtung mit dem Ultraschallwandler (1) nach Anspruch 1.

18. Ultraschallendoskop mit der elektronischen Vorrichtung nach Anspruch 17.

## Revendications

1. Transducteur ultrasonore (1) comprenant :
des éléments (2) comprenant chacun un élément de conversion électromécanique (10) prévu avec une première électrode (20) et une deuxième électrode (30) agencées face l'une à l'autre, qui est configuré pour convertir un signal électrique entré entre la première électrode (20) et la deuxième électrode (30) en une vibration, des bornes (21) de première électrode électriquement connectées à la première électrode (20) et des bornes (31) de deuxième électrode électriquement connectées à la deuxième électrode (30) ;
une section de matrice (3) constituée de n éléments (2) dans un sens des rangées et m éléments (2) dans un sens des colonnes agencée en une forme de matrice, dans laquelle m est égal ou supérieur à n ;
une section de formation de matrice (6) qui forme un état de matrice unidimensionnelle dans le sens des colonnes constituée de m groupes d'éléments formés par connexion électrique des bornes (21) de première électrode voisines dans le sens des rangées parmi les bornes (21) de première électrode dans les groupes d'éléments agencés sur la même colonne et un état de matrice unidimensionnelle dans le sens des rangées constituée de n groupes d'éléments formés par connexion électrique des bornes (21) de première électrode voisines dans le sens des colonnes parmi les bornes (21) de première électrode dans les groupes d'éléments agencés sur la même rangée dans la section de matrice (3) ;
un câblage de signaux (22a, 22b, 22c, 22d, 22e) agencé de manière à être électriquement connecté à au moins une des premières électrodes (20) dans chaque groupe d'éléments des m groupes d'éléments dans l'état de matrice unidimensionnelle dans le sens des colonnes et électriquement connecté à au moins une des premières électrodes (20) dans chaque groupe d'éléments des n groupes d'éléments dans l'état de matrice unidimensionnelle dans le sens des rangées ; et
un câblage de masse (32) agencé de manière à être électriquement connecté à toutes les deuxièmes électrodes (30) dans à la fois l'état de matrice unidimensionnelle dans le sens des colonnes et l'état de matrice unidimensionnelle dans le sens des rangées,
dans lequel les éléments (2) sont connectés de façon flexible les uns aux autres,
la section de formation de matrice (6) inclut un élément (53) qui est extensible/rétractable dans le sens des rangées et le sens des colonnes, et l'élément (53) extensible/rétractable est configuré pour se rétracter dans le sens des rangées ou le sens des colonnes, regrouper les éléments dans le sens des rangées ou le sens des colonnes et ainsi former un état de connexion électrique, qui constitue l'état de matrice unidimensionnelle dans le sens des colonnes ou l'état de matrice unidimensionnelle dans le sens des rangées.

2. Transducteur ultrasonore (1) selon la revendication 1, dans lequel le câblage de signaux (22a, 22b, 22c, 22d, 22e) est électriquement connecté à une des premières électrodes (20) des éléments (2) agencés sur chaque colonne dans la section de matrice (3) et électriquement connecté à au moins une des premières électrodes (20) des éléments (2) agencés sur chaque rangée, et
le câblage de masse (32) est électriquement connecté à au moins une des deuxièmes électrodes (30) des éléments (2) agencés sur chaque colonne et électriquement connecté à au moins une des deuxièmes électrodes (30) des éléments agencés sur chaque rangée dans la section de matrice (3).

3. Transducteur ultrasonore (1) selon la revendication 1, dans lequel le câblage de signaux (22a, 22b, 22c, 22d, 22e) est électriquement connecté à une des premières électrodes (20) des éléments (2) agencés sur chaque colonne et électriquement connecté à au moins une des premières électrodes (20) des éléments (2) agencés sur chaque rangée dans la section de matrice (3), et
le câblage de masse (32) est électriquement connecté aux bornes (31) de deuxième électrode de tous les éléments (2) constituant la section de matrice (3).

4. Transducteur ultrasonore (1) selon la revendication 1, dans lequel les bornes (21) de première électrode sont disposées sur des surfaces se faisant face l'une l'autre dans le sens des rangées et le sens des colonnes des éléments (2) réunis sous une forme de matrice,
les bornes (21) de première électrode se faisant face l'une l'autre dans le sens des rangées ou le sens des colonnes ont des formes s'engageant l'une avec l'autre dans l'état de matrice unidimensionnelle dans le sens des colonnes ou l'état de matrice unidimensionnelle dans le sens des rangées,
les bornes (31) de deuxième électrode sont disposées sur des surfaces se faisant face l'une l'autre dans le sens des rangées et le sens des colonnes des éléments (2) réunis sous une forme de matrice, et
les bornes (31) de deuxième électrode se faisant face l'une l'autre dans le sens des rangées ou le sens des colonnes ont des formes s'engageant l'une avec l'autre dans l'état de matrice unidimensionnelle dans le sens des colonnes ou l'état de matrice unidimensionnelle dans le sens des rangées.

5. Transducteur ultrasonore (1) selon la revendication 1, dans lequel les bornes (21) de première électrode sont disposées sur des surfaces se faisant face l'une l'autre dans le sens des rangées et le sens des colonnes des éléments (2) réunis sous une forme de matrice, et
les bornes (21) de première électrode se faisant face l'une l'autre dans le sens des rangées ou le sens des colonnes ont des formes s'engageant l'une avec l'autre dans l'état de matrice unidimensionnelle dans le sens des colonnes ou l'état de matrice unidimensionnelle dans le sens des rangées.

6. Transducteur ultrasonore (1) selon la revendication 1, dans lequel les bornes (21) de première électrode sont disposées sur des surfaces se faisant face l'une l'autre dans le sens des rangées et le sens des colonnes des éléments (2) réunis sous une forme de matrice,
les bornes (31) de deuxième électrode sont disposées sur des surfaces se faisant face l'une l'autre dans le sens des rangées et le sens des colonnes des éléments (2) réunis sous une forme de matrice,
le transducteur ultrasonore (1) comprenant en outre :
des premiers espaceurs (41) qui ont des éléments conducteurs disposés entre les éléments (2), interposés entre les bornes (21) de première électrode se faisant face l'une l'autre dans le sens des rangées dans l'état de matrice unidimensionnelle dans le sens des colonnes et interposés entre les bornes (21) de première électrode se faisant face l'une l'autre dans le sens des colonnes dans l'état de matrice unidimensionnelle dans le sens des rangées ; et
des deuxièmes espaceurs (42) qui ont des éléments conducteurs disposés entre les éléments (2), interposés entre les bornes (31) de deuxième électrode se faisant face l'une l'autre dans le sens des rangées dans l'état de matrice unidimensionnelle dans le sens des colonnes et interposés entre les bornes (31) de deuxième électrode se faisant face l'une l'autre dans le sens des colonnes dans l'état de matrice unidimensionnelle dans le sens des rangées.

7. Transducteur ultrasonore (1) selon la revendication 1, dans lequel les bornes (21) de première électrode sont disposées sur des surfaces se faisant face l'une l'autre dans le sens des rangées et le sens des colonnes des éléments (2) réunis sous une forme de matrice,
le transducteur ultrasonore (1) comprenant en outre des premiers espaceurs (41) qui ont des éléments conducteurs disposés entre les éléments (2), interposés entre les bornes (21) de première électrode se faisant face l'une l'autre dans le sens des rangées dans l'état de matrice unidimensionnelle dans le sens des colonnes et interposés entre les bornes (21) de première électrode se faisant face l'une l'autre dans le sens des colonnes dans l'état de matrice unidimensionnelle dans le sens des rangées.

8. Transducteur ultrasonore (1) selon la revendication 1, dans lequel un élément (53) élastique est disposé entre les éléments (2).

9. Transducteur ultrasonore (1) selon la revendication 1, dans lequel une section de recouvrement (70) qui recouvre la section de matrice (3) est disposée sur un côté d'émission d'ultrasons de la section de matrice (3).

10. Transducteur ultrasonore (1) selon la revendication 9, dans lequel la section de recouvrement (70) a une fonction d'au moins une d'une couche d'adaptation acoustique et d'une lentille acoustique.

11. Transducteur ultrasonore (1) selon la revendication 10, dans lequel la section de matrice (3) est disposée dans un espace clos incluant la section de recouvrement (70), et l'espace clos est rempli avec un fluide d'isolation électrique.

12. Transducteur ultrasonore (1) selon la revendication 11, dans lequel le fluide d'isolation électrique inclut un fluide magnétique (72), le transducteur ultrasonore (1) comprenant en outre un électroaimant (71) pour déplacer le fluide magnétique (72) jusqu'au côté d'émission d'ultrasons dans l'espace clos.

13. Transducteur ultrasonore (1) selon la revendication 3, dans lequel une section de recouvrement (70) qui recouvre.la section de matrice (3) est disposée sur un côté d'émission d'ultrasons de la section de matrice (3) et au moins une partie de la section de recouvrement (70) sert également de câblage de masse (32).

14. Transducteur ultrasonore (1) selon la revendication 13, dans lequel la section de recouvrement (70) a une fonction d'au moins une d'une couche d'adaptation acoustique et d'une lentille acoustique.

15. Transducteur ultrasonore (1) selon la revendication 1, dans lequel la section de matrice (3) est disposée dans un espace clos formé par un boîtier de recouvrement, et l'espace clos est rempli avec un fluide d'isolation électrique.

16. Transducteur ultrasonore (1) selon la revendication 15, dans lequel le fluide d'isolation électrique inclut un fluide magnétique (72), le transducteur ultrasonore (1) comprenant en outre un électroaimant (71) pour déplacer le fluide magnétique (72) jusqu'au côté d'émission d'ultrasons dans l'espace clos.

17. Dispositif électronique comprenant le transducteur ultrasonore (1) selon la revendication 1.

18. Endoscope à ultrasons comprenant le dispositif électronique selon la revendication 17.
